# EUROPEAN PATENT APPLICATION

(11) **EP 4 283 891 A1**
(43) Date of publication of application: **29.11.2023**
(21) Application number: 21921913.6
(22) Date of filing: 30.01.2021
(51) Int. Cl.: H04L 1/00

(54) **DATA TRANSMISSION METHOD AND APPARATUS, AND ELECTRONIC DEVICE AND STORAGE MEDIUM**

(71) Applicant: Huawei Technologies Co., Ltd., Shenzhen, Guangdong 518129 (CN)
(72) Inventor: MA, Jinju, Shenzhen, Guangdong 518129 (CN)
(74) Representative: Huawei European IPR
(86) International application number: PCT/CN2021/074551
(87) International publication number: WO 2022/160312

(57) **Abstract**

This application discloses a data transmission method and apparatus, an electronic device, and a storage medium, to improve data transmission efficiency and help further reduce a quantity of data transmission interfaces in a system. The data transmission method includes: A sending device obtains, through a plurality of data collection interfaces, audio data collected by corresponding audio collection devices; the sending device superposes audio data whose audio data length is less than a first threshold in the obtained audio data to obtain at least one data combination, where each of the at least one data combination includes audio data collected by at least two audio collection devices, a length of each data combination is less than or equal to the first threshold, and a quantity of the at least one data combination is less than or equal to a quantity of a plurality of data transmission channels; and the sending device sends each data combination through one of at least one data transmission channel.

## Description

### TECHNICAL FIELD

This application relates to the audio field, and specifically discloses a data transmission method and apparatus, an electronic device, and a storage medium.

### BACKGROUND

With rapid development of electronic electrification of vehicles, intelligent and internet-based vehicles have attracted more attention from developers in the automobile field. As an electronic unit that interacts most with people in a cockpit, the intelligent cockpit domain controller system for vehicles has developed from a single infotainment system to a current system that integrates complex functions such as a dashboard, central control entertainment, driver monitoring, and an intelligent voice assistant. A human-computer interaction capability of the intelligent cockpit domain controller system meets the requirements of intelligent and internet-based vehicles at present. The quantity requirements for human-computer interaction interfaces and voice transmission increase sharply.

The requirement for a voice interaction interface such as a microphone of the intelligent cockpit system has evolved from meeting a call requirement by using a single microphone in the past to meeting a requirement for complex voice interaction functions such as call, speech recognition, and muting and noise reduction by using four (or more) channels of microphone inputs at present. Abundant voice interfaces cooperate with a powerful system-on-chip (System on Chip, SoC) chip to implement functions such as a voice assistant manager, navigation, TTS, sound effect, and sound field control. These abundant audio functions raise new requirements on the audio transmission capability of the entire intelligent cockpit system.

In a conventional intelligent cockpit system architecture, each microphone input device is connected to an SoC chip through one audio interface, to transmit audio data collected by the microphone input device to the SoC chip. An increase in a quantity of microphone input devices leads to an increase in a quantity of audio interfaces. Because a size of the SoC chip is fixed, a quantity of pins for receiving data in the SoC chip is limited. To receive data collected by all microphone input devices, a quantity of other functional interfaces needs to be reduced, affecting implementation of other functions on the SoC chip.

Currently, to resolve this problem, a digital signal processing (Digital Signal Process, DSP) chip is added. The DSP chip obtains audio data used by a plurality of microphone input devices, and transmits each piece of audio data through an audio transmission channel in an audio interface, implementing audio interface multiplexing to reduce a quantity of required audio interfaces. In actual use, because sampling depths of a plurality of microphone input devices are different, lengths of audio data collected by the plurality of microphone input devices are different. In addition, bandwidth of a data transmission channel is fixed. When the length of the audio data collected by the microphone input device is less than the bandwidth of the data transmission channel, a waste of transmission resources is caused, and transmission efficiency is reduced.

### SUMMARY

This application provides a data transmission method and apparatus, an electronic device, and a storage medium, to improve transmission efficiency and help further reduce a quantity of data transmission channels in a system.

According to a first aspect, an embodiment of this application provides a data transmission method, where the data transmission method is applied to a sending device. The sending device is connected to a plurality of data collection interfaces and a plurality of data transmission channels, and each data collection interface is configured to connect to a corresponding audio collection device. The sending device may be a DSP chip. The method specifically includes the following steps:

The sending device obtains, through a plurality of data collection interfaces, audio data collected by corresponding audio collection devices; the sending device superposes audio data whose audio data length is less than a first threshold in the obtained audio data to obtain at least one data combination, where each of the at least one data combination includes audio data collected by at least two audio collection devices, a length of each data combination is less than or equal to the first threshold, and a quantity of the at least one data combination is less than or equal to a quantity of a plurality of data transmission channels; and the sending device sends each data combination through one of the plurality of data transmission channels.

According to the foregoing solution, when a length of audio data collected by an audio collection device is less than bandwidth (a first threshold) of a data transmission channel, audio data collected by two or more audio collection devices may be superposed into one data combination, and the data combination is transmitted through one data transmission channel. In other words, one data transmission channel corresponds to a plurality of audio collection devices. This helps improve transmission resource utilization, improve data transmission efficiency, and due to reduction of a quantity of data transmission channels, helps further reduce a quantity of interfaces used by a receiving device to receive audio data.

In a possible design, the sending device sends audio data whose audio data length is equal to the first threshold in the obtained audio data through a data transmission channel in the plurality of data transmission channels except a data transmission channel that is used to transmit the at least one data combination.

In a possible design, if the quantity of the at least one data combination obtained by the sending device through superposition is larger than 1, data transmission channels used to send any two data combinations in the at least one data combination are different.

According to the foregoing solution, the sending device separately sends each data combination through one data transmission channel, thereby improving data transmission efficiency and reducing a transmission delay.

In a possible design, when the sending device sends each data combination through one of at least one data transmission channel, the sending device may further determine, based on a correspondence between a sequence number of a data combination and a sequence number of a data transmission channel, a sequence number of a data transmission channel corresponding to each data combination. Each data combination is sent through a data transmission channel with a corresponding sequence number.

According to the foregoing solution, a data combination may be sent through a specific data transmission channel, and a receiving device connected to a backend may determine, based on a sequence number of the data transmission channel, whether complete data is received, and determine audio data included in the data combination received in the data transmission channel.

In a possible design, that the sending device superposes audio data whose audio data length is less than a first threshold in the obtained audio data to obtain at least one data combination includes: the sending device superposes, according to a preset superposition rule, the audio data whose audio data length is less than the first threshold in the obtained audio data to obtain the at least one data combination. The superposition rule is set based on a collection depth of each audio collection device, and the sampling depth of the audio collection device is in a one-to-one correspondence with the length of the audio data output by the audio collection device.

According to the foregoing solution, the audio data whose audio data length is less than the first threshold in the obtained audio data may be superposed into the at least one data combination according to the superposition rule that is set based on the collection depth of the audio collection device, so as to ensure that a length of each data combination does not exceed the bandwidth of the data transmission channel, so that each data combination may be sent through one data transmission channel, and one data transmission channel corresponds to a plurality of audio collection devices.

In a possible design, before the obtaining, by the sending device through the plurality of data collection interfaces, audio data collected by corresponding audio collection devices, the method further includes:
the sending device receives a first control instruction from a receiving device through at least one of the plurality of data transmission channels, where the first control instruction includes a first target parameter used to adjust collection depths of the corresponding audio collection devices; the sending device sends the first control instruction to the corresponding audio collection devices through the plurality of data collection interfaces; and the sending device sets the superposition rule based on the first target parameter, and sends the superposition rule to the receiving device through at least one of the plurality of data transmission channels.

According to the foregoing solution, a collection depth of each audio collection device may be determined according to the first control instruction sent by the receiving device before data transmission, a length of audio data collected by the audio collection device may be pre-calculated based on the collection depth of the audio collection device, and a superposition rule is set based on the pre-calculated length of audio data collected by each audio collection device. When data transmission is performed in a later period, all obtained audio data may be superposed directly by using the superposition rule that is set above, and a length of each data combination after superposition is not greater than bandwidth of a data transmission channel, so that one data transmission channel corresponds to a plurality of audio collection devices, thereby further improving data transmission efficiency.

In a possible design, before the obtaining, by the sending device through the plurality of data collection interfaces, audio data collected by corresponding audio collection devices, the method further includes:
the sending device receives a second control instruction from a receiving device and the superposition rule through at least one of the plurality of data transmission channels, where the second control instruction includes a second target parameter used to adjust collection depths of the corresponding audio collection devices; and the sending device sends the second control instruction to the corresponding audio collection devices through the plurality of data collection interfaces.

According to the foregoing solution, a collection depth of a connected audio collection device may be controlled according to the second control instruction sent by the receiving device before data transmission, and audio data collected by the audio collection device that changes the collection depth is directly superposed by using a superposition rule sent by the receiving device, and transmitted through a data transmission channel, thereby implementing that one data transmission channel corresponds to a plurality of audio collection devices, further improving data transmission efficiency, and helping reduce workload of the sending device.

In a possible design, the superposition rule includes a superposition order of the audio data and a length of the superposed audio data.

According to a second aspect, an embodiment of this application provides a data transmission method, where the data transmission method is applied to a receiving device. The receiving device is connected to a sending device through a plurality of data transmission channels, and the sending device may be an SoC chip. The method specifically includes the following steps:

The receiving device receives at least one data combination transmitted through the plurality of data transmission channels, where each of the at least one data combination is transmitted through one of the plurality of data transmission channels, and each data combination includes audio data collected by at least two audio collection devices; and the audio collection device is connected to the sending device through a corresponding data collection interface; the receiving device splits the at least one received data combination, to obtain audio data collected by a plurality of audio collection devices; and the receiving device processes the audio data collected by the plurality of split audio collection devices.

According to the foregoing method, audio data collected by two or more audio collection devices may be obtained through one data transmission channel, so that one data transmission channel corresponds to a plurality of audio collection devices, that is, multiplexing of a data transmission channel is implemented. Compared with transmitting audio data collected by one audio collection device, a length of superposed data combination is closer to bandwidth of a data transmission channel, thereby improving data transmission efficiency and helping reduce a quantity of data transmission channels.

In a possible design, the splitting, by the receiving device, the received data combination includes:
the receiving device splits the at least one received data combination according to a preset superposition rule, where the superposition rule is set based on a collection depth of each audio collection device, and the sampling depth of the audio collection device is in a one-to-one correspondence with the length of the audio data collected by the audio collection device.

In a possible design, the splitting, by the receiving device, the received data combination according to a preset superposition rule includes: determining a sequence number of each data combination by using a sequence number of a data transmission channel and a correspondence between a sequence number of a data combination and a sequence number of a data transmission channel; splitting the at least one data combination based on the sequence number of each data combination and the superposition rule.

According to the foregoing solution, the sequence number of the data combination received by the data transmission channel may be determined by using a correspondence between the sequence number of the data combination and the sequence number of the data transmission channel, the superposition sequence of the audio data in the data combination is determined from the superposition rule by using the sequence number of the data combination, and the audio data is split based on the superposition sequence of the audio data, to obtain complete audio data.

In a possible design, before the receiving, by the receiving device, at least one data combination transmitted through the plurality of data transmission channels, the method further includes:
sending a first control instruction to the sending device through at least one of the plurality of data transmission channels, where the first control instruction includes a first target parameter used to adjust a collection depth of a data collection device connected to the sending device; and receiving, through at least one of the plurality of data transmission channels, a superposition rule that is set according to the first control instruction and that is sent by the sending device.

In a possible design, before the receiving, by the receiving device, at least one data combination transmitted through the plurality of data transmission channels, the method further includes: sending a second control instruction and the superposition rule to the sending device through at least one of the plurality of data transmission channels, where the second control instruction includes a second target parameter used to adjust a collection depth of the data collection device connected to the sending device.

In a possible design, the superposition rule includes a superposition order of the audio data and a length of the superposed audio data.

According to a third aspect, an embodiment of this application provides a data transmission apparatus, where the data transmission apparatus is connected to a plurality of data collection interfaces and a plurality of data transmission channels, each data collection interface is connected to a corresponding audio collection device, and the data transmission apparatus includes:
an obtaining unit, configured to obtain, through the plurality of data transmission interfaces, audio data collected by corresponding audio collection devices; a processing unit, configured to superpose audio data whose audio data length is less than a first threshold in the audio data obtained by the obtaining unit, to obtain at least one data combination, where each of the at least one data combination includes audio data collected by at least two audio collection devices, a length of each data combination is less than or equal to the first threshold, and a quantity of the at least one data combination is less than or equal to a quantity of the plurality of data transmission channels; and a transmission unit, configured to send each data combination through one of at least one data transmission channel.

In a possible design, the transmission unit is further configured to send audio data whose audio data length is equal to the first threshold in the audio data obtained by the obtaining unit, through a data transmission channel in the plurality of data transmission channels except a data transmission channel that is used to transmit the at least one data combination.

In a possible design, the quantity of the at least one data combination is larger than 1, and data transmission channels used to send any two data combinations in the at least one data combination are different.

In a possible design, the transmission unit is specifically configured to: send, based on a correspondence between a sequence number of a data combination and a sequence number of a data transmission channel, each data combination through a data transmission channel with a corresponding sequence number.

In a possible design, the processing unit is specifically configured to superpose, according to a preset superposition rule, audio data whose audio data length is less than the first threshold in the audio data obtained by the obtaining unit, to obtain at least one data combination. The superposition rule is set based on a collection depth of each audio collection device, and the collection depth of the audio collection device is in a one-to-one correspondence with the length of the audio data collected by the audio collection device.

In a possible design, before the obtaining unit obtains, through the plurality of data collection interfaces, the audio data collected by the corresponding audio collection devices, the processing unit is further configured to: receive, by using the transmission unit, a first control instruction from a receiving device, where the first control instruction includes a first target parameter used to adjust collection depths of the corresponding audio collection devices; control the obtaining unit to send the first control instruction to the corresponding audio collection devices; and set the superposition rule based on the first target parameter, and send the superposition rule to the receiving device by using the transmission unit.

In a possible design, before the obtaining unit obtains, through the plurality of data collection interfaces, the audio data collected by the corresponding audio collection devices, the processing unit is further configured to:
receive, by using the transmission unit, a second control instruction from a receiving device and the superposition rule, where the second control instruction includes a second target parameter used to adjust collection depths of the corresponding audio collection devices; and control the obtaining unit to send the second control instruction to the plurality of audio collection devices.

In a possible design, the superposition rule includes a superposition order of the audio data and a length of the superposed audio data.

According to a fourth aspect, an embodiment of this application provides a data transmission apparatus, where the data transmission apparatus is connected to a sending device through a plurality of data transmission channels, and the data transmission apparatus includes:
a transceiver unit, configured to receive at least one data combination transmitted through the plurality of data transmission channels, where each of the at least one data combination is transmitted through one of the plurality of data transmission channels, and each data combination includes audio data collected by at least two audio collection devices; and the audio collection device is connected to the sending device through a corresponding data collection interface; a splitting unit, configured to split the at least one data combination received by the transceiver unit, to obtain audio data collected by a plurality of audio collection devices; and a processing unit, configured to process the audio data collected by the plurality of split audio collection devices.

In a possible design, the splitting unit is specifically configured to:
split, by the receiving device according to a preset superposition rule, the at least one data combination received by the transceiver unit, where the superposition rule is set based on a collection depth of each audio collection device, and the sampling depth of the audio collection device is in a one-to-one correspondence with the length of the audio data collected by the audio collection device.

In a possible design, the splitting unit is specifically configured to: determine a sequence number of each data combination by using a correspondence between a sequence number of a data combination and a sequence number of a data transmission channel; and split the at least one data combination based on the sequence number of each data combination and the superposition rule.

In a possible design, before the transceiver unit receives the at least one data combination transmitted through the plurality of data transmission channels, the processing unit is further configured to: send a first control instruction to the sending device by using the transceiver unit, where the first control instruction includes a first target parameter used to adjust a collection depth of an audio collection device connected to the sending device; and the transceiver unit is further configured to receive a superposition rule that is set based on the first target parameter and that is sent by the sending device.

In a possible design, before the transceiver unit receives the at least one data combination transmitted through the plurality of data transmission channels, the processing unit is further configured to send a second control instruction and the superposition rule to the sending device by using the transceiver unit, where the second control instruction includes a second target parameter used to adjust a collection depth of an audio collection device connected to the sending device.

In a possible design, the superposition rule includes a superposition order of the audio data and a length of the superposed audio data.

According to a fifth aspect, an embodiment of this application provides an electronic device. The electronic device includes a processor and a memory, where the memory stores instructions, and when the processor executes the instructions, the apparatus is enabled to perform the method provided in any one of the first aspect and the possible designs of the first aspect of the embodiment, or the method provided in any one of the second aspect and the possible designs of the second aspect of the embodiment.

According to a sixth aspect, an embodiment of this application provides a computer-readable storage medium. The computer-readable storage medium stores a computer program, the computer program includes program instructions, and when the program instructions are executed by a computer, the computer is enabled to perform the method provided in any one of the first aspect and the possible designs of the first aspect of the embodiment, or the method provided in any one of the second aspect and the possible designs of the second aspect of the embodiment.

### BRIEF DESCRIPTION OF DRAWINGS

FIG. 1 is a schematic diagram 1 of a structure of an intelligent cockpit system according to an embodiment of this application;
FIG. 2 is a schematic diagram of a structure of a data transmission interface according to an embodiment of this application;
FIG. 3 is a schematic diagram 2 of a structure of an intelligent cockpit system according to an embodiment of this application;
FIG. 4 is a schematic flowchart of a data transmission method according to an embodiment of this application;
FIG. 5 is a schematic diagram 3 of a structure of an intelligent cockpit system according to an embodiment of this application;
FIG. 6 is a schematic diagram 1 of audio data superposition according to an embodiment of this application;
FIG. 7 is a schematic diagram 4 of a structure of an intelligent cockpit system according to an embodiment of this application;
FIG. 8 is a schematic diagram 2 of audio data superposition according to an embodiment of this application;
FIG. 9 is a schematic diagram 5 of a structure of an intelligent cockpit system according to an embodiment of this application;
FIG. 10 is a schematic diagram 3 of audio data superposition according to an embodiment of this application;
FIG. 11 is a schematic diagram 6 of a structure of an intelligent cockpit system according to an embodiment of this application;
FIG. 12 is a schematic diagram 4 of audio data superposition according to an embodiment of this application;
FIG. 13 is a schematic flowchart of a data transmission method according to an embodiment of this application;
FIG. 14 is a schematic diagram 1 of a structure of a data transmission apparatus according to an embodiment of this application;
FIG. 15 is a schematic diagram 2 of a structure of a data transmission apparatus according to an embodiment of this application; and
FIG. 16 is a schematic diagram of a structure of an electronic device according to an embodiment of this application.

### DESCRIPTION OF EMBODIMENTS

The following clearly and completely describes the technical solutions in embodiments of the present invention with reference to the accompanying drawings in embodiments of the present invention. It is clear that the described embodiments are some rather than all of embodiments of the present invention. All other embodiments obtained by a person of ordinary skill in the art based on embodiments of the present invention without creative efforts shall fall within the protection scope of the present invention.

It should be noted that, in the descriptions of this application, "at least one" means one or more, and "a plurality of" means two or more. In view of this, in embodiments of this application, "a plurality of" may also be understood as "at least two". In addition, it should be understood that in description of this application, terms such as "first" and "second" are merely used for distinguishing and description, but should not be understood as indicating or implying relative importance, or should not be understood as indicating or implying a sequence.

It should be noted that in embodiments of this application, "connection" means an electrical connection, and a connection between two electrical elements may be a direct or an indirect connection between the two electrical elements. For example, a connection between A and B may be a direct connection between A and B, or may be an indirect connection between A and B through one or more other electrical elements. For example, a connection between A and B may be alternatively a direct connection between A and C, a direct connection between C and B, and the connection between A and B is implemented through C.

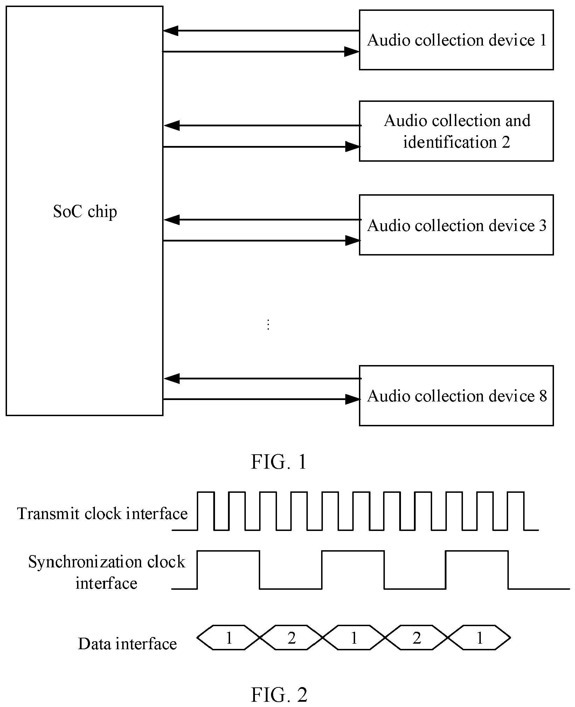

The data transmission method and a data receiving method provided in embodiments of this application may be applied to an intelligent cockpit system of a vehicle. FIG. 1 is a schematic diagram of an architecture of an intelligent cockpit system of a vehicle according to an embodiment of this application. As shown in FIG. 1, the intelligent cockpit system mainly includes: a plurality of audio collection devices (eight audio collection devices are used as an example in FIG. 1) and an SoC chip configured to process audio data collected by the audio collection device. An audio device connected to the SoC chip may include four first-type audio collection devices configured to obtain voice data of a user, and four second-type audio collection devices configured to obtain an audio played by an audio playing device. The SoC chip obtains audio data collected by the second-type audio collection device, and performs, based on the obtained audio data, echo processing on the audio played by the audio playing device.

It should be understood that the intelligent cockpit system provided in this embodiment of this application further includes another type of audio collection device, configured to implement another function.

The plurality of audio collection devices and the SoC chip are connected through a plurality of data transmission channels. Each audio collection device is connected to the SoC chip through a corresponding data transmission channel.

When the collected audio data is transmitted to the SoC chip through the data transmission channel shown in FIG. 1, each audio collection device needs to be provided with one different data transmission channel, and the SoC chip also needs to be provided with a same quantity of pins as the audio collection devices. The pins are connected to the data transmission channel to obtain audio data collected by all audio collection devices in the intelligent cockpit system. In the foregoing audio data transmission manner, when the quantity of pins of the SoC chip is fixed, to obtain the audio data collected by all audio collection devices, a quantity of other pins of the SoC chip needs to be reduced. This may cause implementation of another function of the intelligent cockpit system.

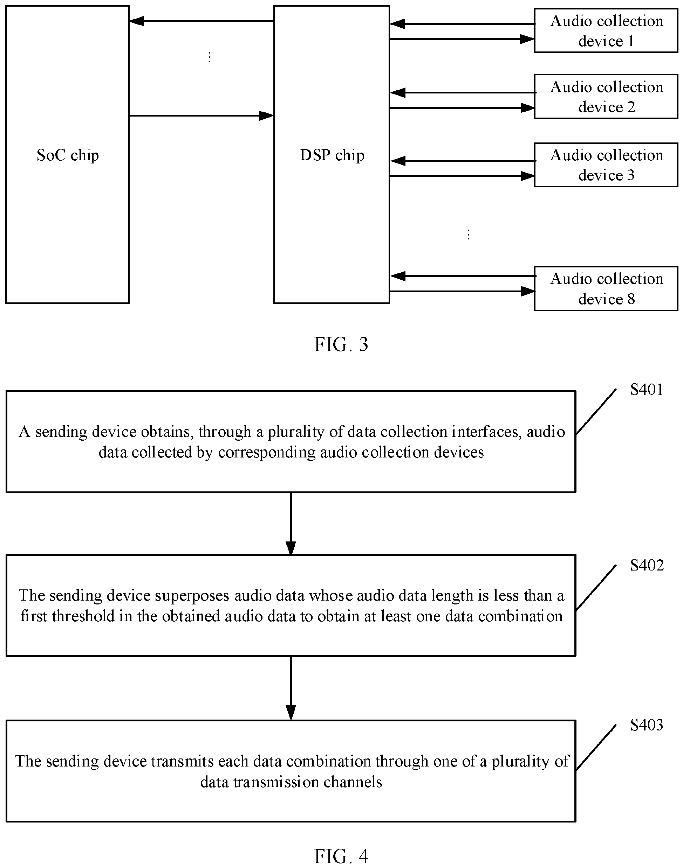

Based on the foregoing situation, a data transmission channel multiplexing solution is provided. As shown in FIG. 2, each data transmission channel includes three interfaces: a transmit clock interface, a synchronization clock interface, and a data interface. Each data interface may include at least two data transmission channels. To implement multiplexing of the data transmission interface, a DSP chip is disposed between the SoC chip and the audio collection device. As shown in FIG. 3, the DSP chip is provided with a plurality of data collection interfaces and a plurality of data transmission channels. The plurality of data collection interfaces are connected to a plurality of audio collection devices in a one-to-one correspondence. The DSP chip is connected to the SoC chip through the plurality of data transmission channels. The DSP chip may obtain, through the plurality of data collection interfaces, audio data collected by the plurality of audio collection devices, and transmit each piece of collected audio data to the SoC chip through one data transmission channel of the data transmission channel. It should be noted that the foregoing data collection interface and the data transmission interface may be interfaces of a same type, or may be interfaces of different types.

During actual use, lengths of audio data collected by the data collection apparatuses may be different, and bandwidth of data transmission channels included in the data transmission channel is the same. When the length of the audio data transmitted on the data transmission channel is less than the bandwidth of the data transmission channel, a waste of transmission resources of the data transmission channel is caused, and data transmission efficiency is reduced.

The foregoing describes problems that transmission resources are wasted and data transmission efficiency is low on the data transmission interface disposed in the intelligent cockpit system. To resolve the foregoing problem, an embodiment of this application provides a data transmission method. In this method, audio data collected by a plurality of audio collection devices can be transmitted through one data transmission channel, and data transmission is implemented in a one-to-many manner, thereby improving data transmission efficiency, and helping reduce a quantity of data transmission interfaces in the intelligent cockpit system.

FIG. 4 is a schematic diagram of a data transmission method according to an embodiment of this application. The method may be performed by a sending device. The sending device may be a DSP chip in the foregoing intelligent cockpit system. The DSP chip may include a plurality of data collection interfaces and at least one data transmission channel. Each data transmission channel in the at least one data transmission channel forms at least two data transmission channels. The plurality of audio collection interfaces are configured to connect to corresponding audio collection devices.

During specific implementation, the data transmission method may include the following steps:
Step 401: The sending device obtains, through the plurality of data collection interfaces, audio data collected by the corresponding audio collection devices.
Step 402: The sending device superposes audio data whose audio data length is less than a first threshold in the obtained audio data to obtain at least one data combination. It should be noted that the length of the audio data provided in this embodiment of this application refers to a quantity of bytes occupied for storing the audio data.

Each of the at least one data combination includes audio data collected by at least two audio collection devices, and a length of each data combination is less than or equal to the first threshold. The length of each data combination is a sum of lengths of audio data superposed in the data combination.

The first threshold is bandwidth of the data transmission channel. A quantity of the at least one data combination obtained by the sending device through superposition needs to be less than or equal to a quantity of a plurality of data transmission channels. According to the foregoing solution, the sending device may allocate a sequence number to the data combination and the data transmission channel. The sequence number of the data combination is in a one-to-one correspondence with the sequence number of the data transmission channel. In this way, the data combination may be transmitted through a data transmission channel with a corresponding sequence number, so that the data combination is transmitted through a fixed data transmission channel. This ensures that the sending device can transmit all data combinations, and subsequently, when receiving the data combination, a device can accurately identify the audio data included in the data combination.

In a possible implementation, in the foregoing step 402, the DSP chip may set a correspondence between a sequence number of the data combination and a sequence number of the transmission channel. When a data combination is transmitted, a sequence number of each data combination is first obtained, a sequence number of a data transmission channel corresponding to the data combination is found from the foregoing correspondence based on the sequence number of each data combination, and the data combination is transmitted through the corresponding data transmission channel.

After the data combination is superposed and the correspondence between a sequence number of a data combination and a sequence number of a data transmission channel is determined, the sending device may transmit the foregoing at least one data combination. For details, refer to step 403.

Step 403: The sending device sends each data combination through one of the plurality of data transmission channels.

In a possible implementation, if a quantity of the at least one data combination is larger than 1, to further improve system transmission efficiency and shorten transmission time, data transmission channels used to send any two data combinations in the at least one data combination are different.

In a possible implementation, when some data transmission channels are damaged or to further increase a multiplexing degree of the data transmission channels, some or all data combinations may be sequentially transmitted through one data transmission channel. To be specific, after it is determined that transmission of a current data combination is completed, a next data combination continues to be transmitted through the data transmission channel until transmission of all data combinations is completed.

It should be noted that the sending device may send the audio data whose audio data length is equal to the first threshold in the obtained audio data through a data transmission channel in the plurality of data transmission channels except the data transmission channel that is used to transmit the at least one data combination.

According to the solution provided in step 401 to step 403, audio data whose data length is less than the bandwidth of the data transmission channel may be superposed to obtain at least one data combination, and each of the at least one data combination is transmitted through one data transmission channel. In this way, one data transmission channel corresponds to a plurality of audio collection devices, that is, multiplexing of a data transmission channel is implemented. This further reduces a quantity of data transmission channels, and helps further reduce a quantity of data transmission channels between a sending device and a receiving device.

It should be understood that, because audio data collected by at least two audio collection devices is superposed in each data combination, a length of a single data combination is greater than a length of a single piece of audio data. Transmitting a data combination in the foregoing transmission manner helps more effectively occupy transmission resources, thereby improving data transmission efficiency.

It should be noted that a prerequisite for the sending device to send each of the at least one data combination through one data transmission channel is that superposition of the audio data is completed. In actual use, the sending device superposes, according to a preset superposition rule, audio data whose audio data length is less than the first threshold in the obtained audio data to obtain the at least one data combination. The superposition rule is set based on a collection depth of each audio collection device. The superposition rule includes a superposition order of the audio data and a length of the superposed audio data.

In a possible implementation, before transmitting data, the sending device receives a first control instruction sent by a connected receiving device. The first control instruction includes a first target parameter used to adjust collection depths of a plurality of audio collection devices connected to the sending device. After receiving the first control instruction, the sending device outputs the first control instruction to the audio collection devices respectively through a plurality of data collection interfaces. In addition, the sending device pre-calculates, based on the first target parameter, a length of audio data output by each audio collection device under control of the control instruction, and the sending device sets the superposition rule based on the pre-calculated length of the audio data.

In an example, after receiving the superposition rule, the sending device sets a correspondence between a sequence number of a data combination and a sequence number of a data transmission channel, and sends the correspondence and the superposition rule to the receiving device. The sending device and the receiving device may be connected through a plurality of data transmission channels on the sending device. The superposition rule includes a superposition order of the audio data and a length of the superposed audio data.

Specifically, after collecting audio data collected by a corresponding audio data device through the data collection interface, the sending device sequentially superposes, by using the superposition rule, the audio data according to a superposition order in the superposition rule, to obtain the at least one data combination.

It should be understood that, according to the foregoing solution, the superposition rule and the foregoing correspondence may be sent to the receiving device. When subsequently receiving the data combination sent by the sending device, the receiving device may determine whether complete data is received, and accurately identify the obtained data combination, thereby improving transmission accuracy.

In an example, the first control instruction includes a plurality of sub-control instructions, and the plurality of sub-control instructions are in a one-to-one correspondence with the plurality of audio collection devices. Each sub-control instruction is used to adjust a collection depth of a corresponding audio collection device. After receiving the first control instruction sent by the receiving device, the sending device sends each sub-control instruction to the corresponding audio collection device through a data audio collection interface.

In another possible implementation, before performing data transmission, the sending device receives a second control instruction from the receiving device and the superposition rule, where the second control instruction includes a second target parameter used to adjust collection depths of a plurality of audio collection devices connected to the sending device. After receiving the second control instruction, the sending device separately outputs the second control instruction to each corresponding audio collection device through the plurality of data collection interfaces.

In an example, the sending device receives the second control instruction sent by the connected receiving device, the superposition rule, and a correspondence between a sequence number of a data combination and a sequence number of a data transmission channel.

The following describes a process of superposing audio data into a data combination with reference to the following embodiments.

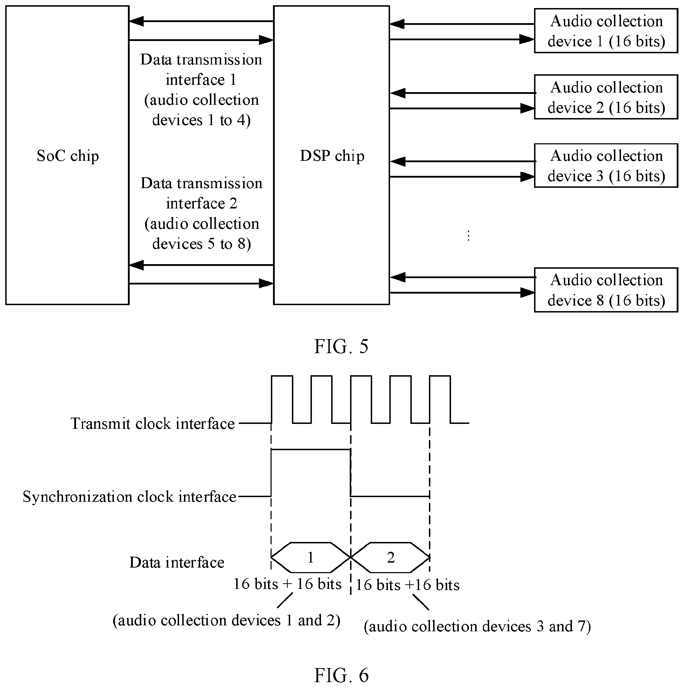

Scenario 1: Referring to FIG. 5, the intelligent cockpit system includes eight audio collection devices, and a collection depth of each audio collection device is 2. In other words, a length of audio data collected by the audio collection device is 16 bits (binary digit, bit). Two data transmission channels exist between the SoC chip and the DSP chip, each data transmission channel includes two data transmission channels, and bandwidth of each data transmission channel is 32 bits.

As shown in FIG. 6, after receiving audio data collected by audio collection devices 1 to 8, the sending device directly superposes audio data collected by audio collection devices 1 and 2 into data combination 1, directly superposes audio data collected by audio collection devices 3 and 4 into data combination 2, directly superposes audio data collected by audio collection devices 5 and 6 into data combination 3, directly superposes audio data collected by audio collection devices 7 and 8 into data combination 4, transmits data combination 1 through a data transmission channel whose sequence number is 1, transmits data combination 2 through a data transmission channel whose sequence number is 2, transmits data combination 3 through a data transmission channel whose sequence number is 3, and transmits data combination 4 through a data transmission channel whose sequence number is 4. Data transmission channels whose sequence numbers are 1 and 2 constitute data transmission interface 1, and data transmission channels whose sequence numbers are 3 and 4 constitute data transmission interface 2.

According to the foregoing solution, a length of each data combination is bandwidth of a data transmission channel, and each data combination may be transmitted through one data transmission channel. In this way, audio data collected by two audio collection devices is transmitted on a single data transmission channel. Therefore, transmission efficiency can be improved while a transmission requirement is met. In addition, because data transmission channel multiplexing is used, a quantity of data transmission channels can be reduced by half. This helps further reduce a quantity of data transmission channels connected between the sending device and the receiving device when a quantity of audio collection devices is relatively large.

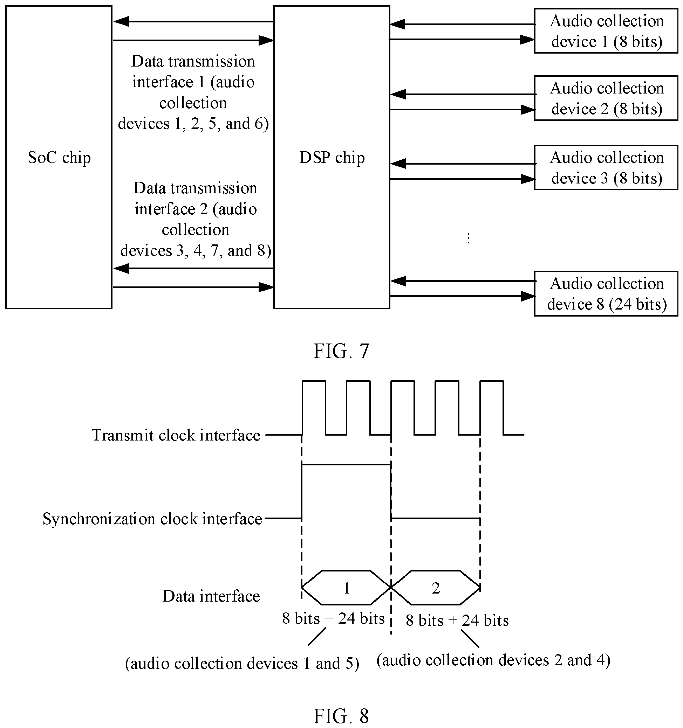

Scenario 2: Referring to FIG. 7, the intelligent cockpit system includes eight audio collection devices. A collection depth of each of audio collection devices 1 to 4 is 1, and a collection depth of each of audio collection devices 5 to 8 is 3. That is, a length of audio data collected by each of audio collection devices 1 to 4 is 8 bits, and a length of audio data collected by each of audio collection devices 1 to 4 is 24 bits. There are two data transmission interfaces between the SoC chip and the DSP chip. Each data transmission interface includes two data transmission channels, and bandwidth of each data transmission channel is 32 bits.

As shown in FIG. 8, after receiving audio data collected by audio collection devices 1 to 8, the sending device directly superposes audio data collected by audio collection device 1 and audio collection device 5 into data combination 1, directly superposes audio data collected by audio collection device 2 and audio collection device 6 into data combination 2, directly superposes audio data collected by audio collection device 3 and audio collection device 7 into data combination 3, directly superposes audio data collected by audio collection device 4 and audio collection device 8 into data combination 4, transmits data combination 1 through a data transmission channel whose sequence number is 1, transmits data combination 2 through a data transmission channel whose sequence number is 2, transmits data combination 3 through a data transmission channel whose sequence number is 3, and transmits data combination 4 through a data transmission channel whose sequence number is 4. Data transmission channels whose sequence numbers are 1 and 2 constitute data transmission interface 1, and data transmission channels whose sequence numbers are 3 and 4 constitute data transmission interface 2.

According to the foregoing solution, a length of each data combination is exactly bandwidth of a data transmission channel, and each data combination may be transmitted through one data transmission channel. In this way, audio data collected by two audio collection devices is transmitted on a single data transmission channel. Therefore, transmission efficiency can be improved while a transmission requirement is met. In addition, because data transmission channel multiplexing is used, a quantity of data transmission channels can be reduced by half. This helps further reduce a quantity of data transmission channels connected between the sending device and the receiving device when a quantity of audio collection devices is relatively large.

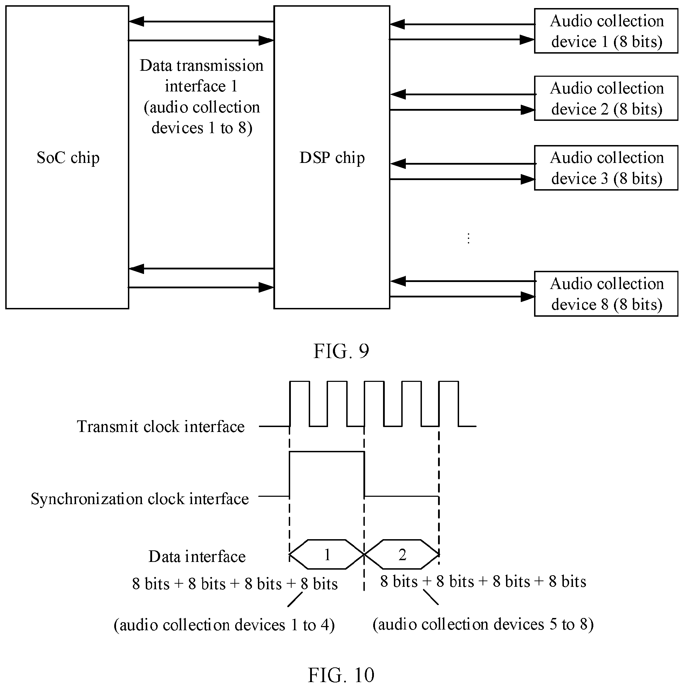

Scenario 3: Referring to FIG. 9, the intelligent cockpit system includes eight audio collection devices, and a collection depth of each of audio collection devices 1 to 8 is 1. That is, a length of audio data collected by each of audio collection devices 1 to 8 is 8 bits. There are two data transmission interfaces between the SoC chip and the DSP chip. Each data transmission interface includes two data transmission channels, and bandwidth of the data transmission channel is 32 bits.

As shown in FIG. 10, after receiving audio data collected by audio collection devices 1 to 8, the sending device directly superposes audio data collected by audio collection devices 1 to 4 into data combination 1, directly superposes audio data collected by audio collection devices 5 to 8 into data combination 2, transmits data combination 1 through a data transmission channel whose sequence number is 1, and transmits data combination 2 through a data transmission channel whose sequence number is 2. Data transmission channels whose sequence numbers are 1 and 2 constitute data transmission interface 1, and data transmission channels whose sequence numbers are 3 and 4 constitute data transmission interface 2.

According to the foregoing solution, a length of each data combination is exactly bandwidth of a data transmission channel, so that audio data collected by four audio collection devices is transmitted through a single data transmission channel. Therefore, transmission efficiency can be improved while a transmission requirement is met. In addition, because data transmission channel multiplexing is used, a quantity of data transmission channels can be reduced by three quarters. This helps further reduce a quantity of data transmission channels connected between the sending device and the receiving device when a quantity of audio collection devices is relatively large.

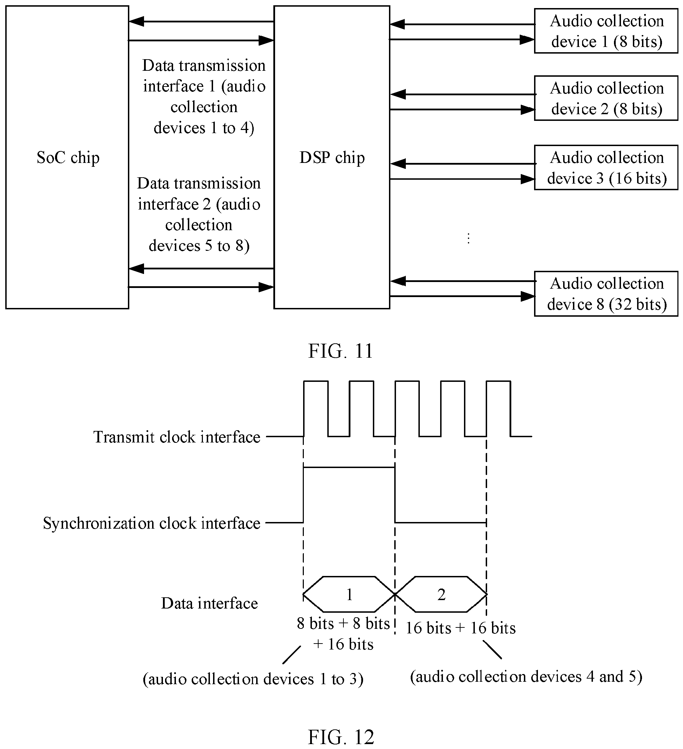

Scenario 4: As shown in FIG. 11, the intelligent cockpit system includes eight audio collection devices. A collection depth of each of audio collection devices 1 and 2 is 1, a collection depth of each of audio collection devices 3 to 7 is 2, and a collection depth of audio collection device 8 is 4. That is, a length of audio data collected by each of audio collection devices 1 and 2 is 8 bits, a length of audio data collected by each of audio collection devices 3 to 7 is 16 bits, and a length of audio data collected by audio collection device 8 is 32 bits. There are two data transmission interfaces between the SoC chip and the DSP chip. Each data transmission interface includes two data transmission channels, and bandwidth of the data transmission channel is 32 bits.

As shown in FIG. 12, after receiving audio data collected by audio collection devices 1 to 8, the sending device directly superposes audio data collected by audio collection devices 1 to 3 into data combination 1, directly superposes audio data collected by audio collection devices 4 and 5 into data combination 2, and directly superposes audio data collected by audio collection devices 6 and 7 into data combination 3. After the data combination is superposed, data combination 1 is transmitted through a data transmission channel whose sequence number is 1, data combination 2 is transmitted through a data transmission channel whose sequence number is 2, data combination 3 is transmitted through a data transmission channel whose sequence number is 3, and audio data collected by audio collection device 8 is directly transmitted through a data transmission channel whose sequence number is 4. Data transmission channels whose sequence numbers are 1 and 2 constitute data transmission interface 1, and data transmission channels whose sequence numbers are 3 and 4 constitute data transmission interface 2.

According to the foregoing solution, a length of each data combination is exactly bandwidth of a data transmission channel, so that audio data collected by two or more audio collection devices is transmitted through a single data transmission channel. Therefore, transmission efficiency can be improved while a transmission requirement is met. In addition, the use of data transmission channel multiplexing helps further reduce a quantity of data transmission channels connected between the sending device and the receiving device when a quantity of audio collection devices is relatively large.

It should be understood that, according to the foregoing data transmission solution, superposition rules may also be flexibly set based on different collection depths of audio collection devices. Details are not described herein again.

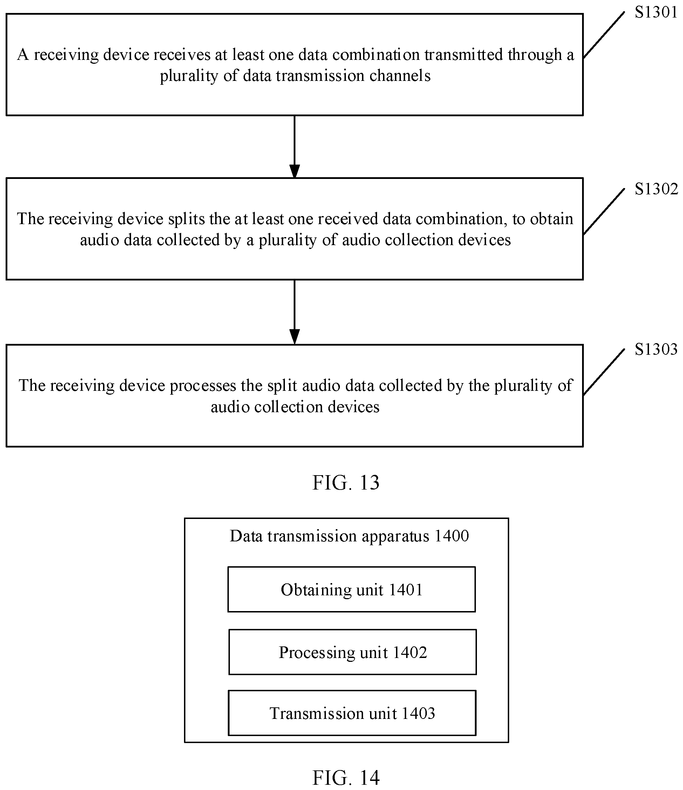

FIG. 13 is a schematic diagram of another data transmission method according to an embodiment of this application. The method may be performed by a receiving device. The receiving device may be an SoC chip in the foregoing intelligent cockpit system. The receiving device is connected to a sending device through a plurality of data transmission channels. The method includes the following steps:

Step 1301: A receiving device receives at least one data combination transmitted through a plurality of data transmission channels. Each of the at least one data combination is transmitted through one of the plurality of data transmission channels, and each data combination includes audio data collected by at least two audio collection devices. The audio collection device is connected to the sending device through a corresponding data collection interface.

Step 1302: The receiving device splits the at least one received data combination, to obtain audio data collected by a plurality of audio collection devices.

In a possible implementation, before receiving the at least one data combination, the receiving device sends a first control instruction to the sending device through the plurality of data transmission channels, where the first control instruction includes a first target parameter used to adjust collection depths of a plurality of audio collection devices connected to the sending device; and receives a superposition rule sent by the sending device and a correspondence between a sequence number of a data combination and a sequence number of a data transmission channel through the plurality of data transmission channels. The superposition rule is set by the sending device based on the first target parameter.

In another possible implementation, before receiving the at least one data combination, the receiving device sends a second control instruction and the superposition rule to the sending device through the plurality of data transmission channels, where the second control instruction is used to adjust a second target parameter of collection depths of a plurality of audio collection devices connected to the sending device; and the sending device may superpose the received audio data according to the superposition rule to constitute the at least one data combination. The superposition rule is set by the receiving device based on the second target parameter.

In an example, the receiving device sets a correspondence between a sequence number of a data combination and a sequence number of a data transmission channel, and sends the correspondence to the sending device through a plurality of data transmission channels.

In another example, the receiving device receives, through a plurality of data transmission channels, a correspondence between a sequence number of a data combination and a sequence number of a data transmission channel that is sent by the sending device.

In actual use, after receiving the at least one data combination, the receiving device first determines a sequence number of each data combination based on a correspondence between a sequence number of a data combination and a sequence number of a data transmission channel, determines a sequence of superposed audio data in the data combination and a length of each piece of superposed audio data from the superposition rule, and splits the data combination based on the foregoing determined sequence of superposed audio data and the length of superposed audio data, to obtain a plurality of pieces of audio data. It should be understood that another data combination in the at least one data combination may be split in the foregoing splitting manner until splitting of the at least one data combination is completed.

The following describes a data combination splitting process in this embodiment of this application with reference to FIG. 2.

For example, with respect to the data combination received by a data transmission channel slot 1 shown in FIG. 2, a length of the data combination is 32 bits. A sequence number of the data combination received by the data transmission channel slot 1 is determined to be 1 by using a correspondence between a sequence number of a data combination and a sequence number of a data transmission channel. According to the foregoing superposition rule, data collected by audio collection device 1 is first superposed in the data combination whose sequence number is 1, audio data collected by audio collection device 2 is then superposed, and a length of the audio data collected by each of the two audio collection devices is 16 bits. In this case, when the data combination whose sequence number is 1 is split, first 16 bits of data in the data combination whose sequence number is 1 is the audio data collected by audio collection device 1, and the last 16 bits of data is audio data collected by audio collection device 2.

After obtaining, through data combination splitting, the audio data collected by all the audio collection devices, the receiving device may process the audio data. For details, refer to step 1303.

Step 1303: The receiving device processes the split audio data collected by the plurality of audio collection devices.

In an example, the receiving device is further connected to a plurality of audio playing devices. The receiving device may convert audio data collected by the first-type audio collection device into a voice, and send the voice to the plurality of audio playing devices for later playing. The receiving device may perform preset processing on the audio data collected by the second-type audio collection device, to obtain adjustment parameters of the plurality of audio collection devices, and output the adjustment parameters to corresponding audio playing devices.

In the foregoing step 1301 to step 1303, audio data collected by two or more audio collection devices may be received through one data transmission channel. One data transmission channel connected to the receiving device corresponds to a plurality of audio collection devices, so that multiplexing of the data transmission channel is implemented. This helps reduce a quantity of pins of an SoC chip and improves utilization of the data transmission channel because a length of a data combination is greater than a length of a single piece of audio data, thereby improving data transmission efficiency.

It should be understood that, in the intelligent cockpit system shown in FIG. 1, the DSP chip may be further connected to an audio playing device, and is configured to play audio data sent by the SoC chip. When a quantity of pins of the SoC chip is limited, the SoC chip serving as a sending device may alternatively use the data transmission method shown in FIG. 4 to superpose to-be-transmitted audio transmission into at least one data transmission combination, and transmit the at least one data transmission combination to the DSP chip through a data transmission channel. In this case, the DSP chip serving as a receiving device may use the data transmission method shown in FIG. 13 to receive the at least one data combination sent by the SoC chip, and split the received data combination, to obtain a plurality of pieces of audio data, and output the plurality of pieces of audio data to corresponding audio playing devices through a data interface.

FIG. 4 to FIG. 12 describe in detail the data transmission method provided in this application. With reference to FIG. 14, the following describes a data transmission apparatus provided in this application.

FIG. 14 is a schematic diagram of a structure of a data transmission apparatus according to this application. As shown in the figure, the data transmission apparatus 1400 may be connected to a plurality of data collection interfaces and a plurality of data transmission channels, and each data collection device is connected to a corresponding audio collection device. The data transmission apparatus 1400 specifically includes an obtaining unit 1401, a processing unit 1402, and a transmission unit 1403. Details are as follows:

The obtaining unit 1401 is configured to obtain, through the foregoing audio collection interface, audio data collected by corresponding audio collection devices; the processing unit 1402 is configured to superpose audio data whose audio data length is less than a first threshold in the audio data obtained by the obtaining unit, to obtain at least one data combination, where each of the at least one data combination includes audio data collected by at least two audio collection devices, a length of each data combination is less than or equal to the first threshold, and a quantity of at least one data combination is less than or equal to a quantity of the plurality of data transmission channels; and the transmission unit 1403 is configured to send each data combination through one of the plurality of data transmission channels.

Optionally, the processing unit 1402 is further configured to send audio data whose audio data length is equal to the first threshold in the audio data obtained by the obtaining unit 1401, through a data transmission channel in the plurality of data transmission channels except a data transmission channel that is used to transmit the at least one data combination.

It should be understood that if the quantity of the at least one data combination is larger than 1, data transmission channels used to send any two data combinations in the at least one data combination are different.

Optionally, the transmission unit 1403 is specifically configured to transmit, by using a correspondence between a sequence number of a data combination and a sequence number of a data transmission channel, each data combination through a data transmission channel with a corresponding sequence number.

Optionally, the processing unit 1402 is specifically configured to superpose, according to a preset superposition rule, audio data whose audio data length is less than the first threshold in the audio data obtained by the obtaining unit 1401, to obtain at least one data combination. The superposition rule is set based on a collection depth of each audio collection device, and the collection depth of the audio collection device is in a one-to-one correspondence with the length of the audio data collected by the audio collection device.

Optionally, before the obtaining unit 1401 obtains, through the plurality of data collection interfaces, the audio data collected by the corresponding audio collection devices, the processing unit 1402 is further configured to: receive, by using the transmission unit 1403, a first control instruction from a receiving device, where the first control instruction includes a first target parameter used to adjust collection depths of the corresponding audio collection devices; control the obtaining unit 1401 to send the first control instruction to the corresponding audio collection devices; and set the superposition rule based on the first target parameter, and send the superposition rule to the receiving device by using the transmission unit 1403.

Optionally, before the obtaining unit 1401 obtains, through the plurality of data collection interfaces, the audio data collected by the corresponding audio collection devices, the processing unit 1402 is further configured to: receive, by using the transmission unit 1403, a second control instruction from a receiving device and the superposition rule, where the second control instruction includes a second target parameter used to adjust collection depths of the corresponding audio collection devices; and control the obtaining unit 1401 to send the second control instruction to the corresponding audio collection devices.

Optionally, the superposition rule includes a superposition order of the audio data and a length of the superposed audio data.

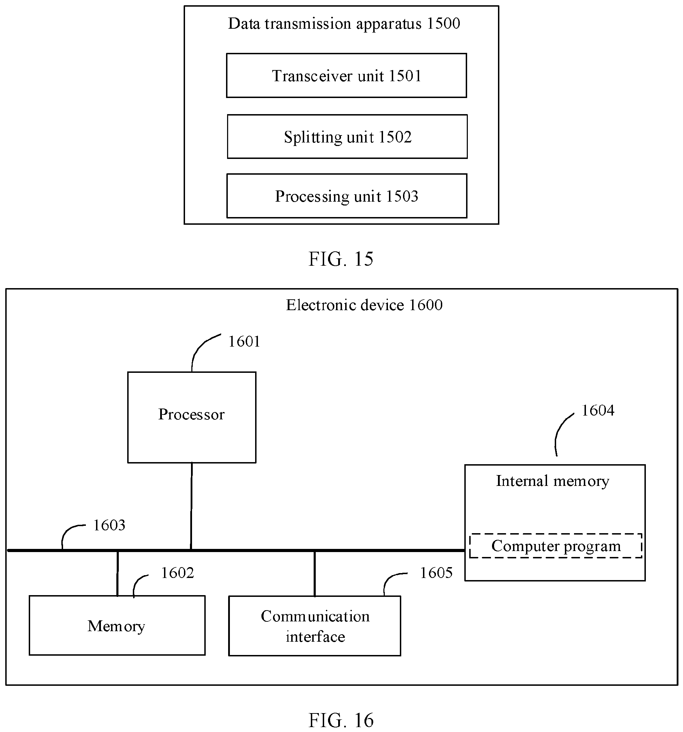

FIG. 13 describes in detail the data transmission method provided in this application. With reference to FIG. 15, the following describes a data transmission apparatus provided in this application.

FIG. 15 is a schematic diagram of a structure of a data transmission apparatus according to this application. As shown in the figure, a data transmission apparatus 1500 may be connected to a sending device through a plurality of data transmission channels. The data transmission apparatus 1500 specifically includes a transceiver unit 1501, a splitting unit 1502, and a processing unit 1503. Details are as follows:

The transceiver unit 1501 is configured to receive at least one data combination transmitted through the plurality of data transmission channels, where each of the at least one data combination is transmitted through one of the plurality of data transmission channels, and each data combination includes audio data collected by at least two audio collection devices; and the audio collection device is connected to the sending device through a corresponding data collection interface; the splitting unit 1502 is configured to split the at least one data combination received by the transceiver unit 1501, to obtain audio data collected by a plurality of audio collection devices; and the processing unit 1503 is configured to process the split audio data collected by the plurality of audio collection devices.

Optionally, the splitting unit 1502 is specifically configured to split, by the receiving device according to a preset superposition rule, the at least one data combination received by the transceiver unit. The superposition rule is set based on a collection depth of each audio collection device, and the sampling depth of the audio collection device is in a one-to-one correspondence with the length of the audio data collected by the audio collection device.

Optionally, the splitting unit 1502 is specifically configured to determine a sequence number of each data combination by using a correspondence between a sequence number of a data combination and a sequence number of a data transmission channel; and split the at least one data combination based on the sequence number of each data combination and the superposition rule.

Optionally, before the transceiver unit 1501 receives the at least one data combination transmitted through the plurality of data transmission channels, the processing unit 1503 is further configured to: send a first control instruction to the sending device by using the transceiver unit 1501, where the first control instruction includes a first target parameter used to adjust a collection depth of a data collection device connected to the sending device; and the transceiver unit 1501 is further configured to receive a superposition rule that is set based on the first target parameter and that is sent by the sending device.

Optionally, before the transceiver unit 1501 receives the at least one data combination transmitted through the plurality of data transmission channels, the processing unit 1503 is further configured to send a second control instruction and the superposition rule to the sending device by using the transceiver unit 1501, where the second control instruction includes a second target parameter used to adjust a collection depth of a data collection device connected to the sending device.

Optionally, the superposition rule includes a superposition order of the audio data and a length of the superposed audio data.

It should be understood that the data transmission apparatuses 1400 and 1500 in embodiments of this application may be implemented by using an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), generic array logic (generic array logic, GAL), or any combination thereof. When the data transmission method shown in FIG. 4 or FIG. 13 may be implemented by using software, the data transmission apparatuses 1400 and 1500 and the modules thereof may also be software modules.

The data transmission apparatuses 1400 and 1500 according to embodiments of this application may correspondingly perform the method described in embodiments of this application. In addition, the foregoing and other operations and/or functions of the units in the data transmission apparatus 1400 and the data transmission apparatus 1500 are respectively intended to implement corresponding procedures of the methods in FIG. 4 or FIG. 13. For brevity, details are not described herein again.

FIG. 16 is a schematic diagram of a structure of an electronic device according to an embodiment of this application. The electronic device is applied to the intelligent cockpit system shown in FIG. 1, and is configured to implement the data transmission method shown in FIG. 4 or FIG. 13. Referring to FIG. 16, the electronic device 1600 may include a processor 1601, a memory 1602, and a bus 1603. The processor 1601 and the memory 1602 communicate by using the bus 1603, or may implement communication by using another means such as wireless transmission. The memory 1602 is configured to store instructions, and the processor 1601 is configured to execute the instructions stored in the memory 1602. The memory 1602 stores program code, and the processor 1601 may invoke the program code stored in the memory 1602 to perform the data transmission method shown in FIG. 4, or to perform the data transmission method shown in FIG. 9.

Optionally, the electronic device 1600 shown in FIG. 16 further includes an internal memory 1604 and a communication interface 1605. The internal memory 1604 may be physically integrated with the processor 1601, or exists in the processor 1601 or in an independent unit form. A computer program may be stored in the internal memory 1604 or the memory 1602. Optionally, the computer program code (for example, a program to be debugged) stored in the memory 1602 is copied to the internal memory 1604, and is then executed by the processor 1601.

It should be understood that, in this embodiment of this application, the processor 1601 may be a central processing unit (central processing unit, CPU), and the processor 1601 may be alternatively another general-purpose processor, a digital signal processor (digital signal processing, DSPDSP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, the processor 1601 may be another programmable logic device, a discrete gate or transistor logic device, a discrete hardware component, or the like. The general-purpose processor may be a microprocessor, or may be any conventional processor or the like.

The memory 1602 may include a read-only memory and a random access memory, and provide instructions, a program, data, and the like for the processor 1601. For example, a program may include program code, and the program code includes computer operation instructions. The memory 1602 may further include a non-volatile random access memory. For example, the memory 1602 may further store information of a device type.

The memory 1602 may be a volatile or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The bus 1603 may further include an address bus, a power bus, a control bus, a status signal bus, and the like in addition to a data bus. The bus 1603 may be a peripheral component interconnect (peripheral component interconnect, PCI) bus, or an extended industry standard architecture (extended Industry standard architecture, EISA) bus, or the like; or may be a controller area network (controller area network, CAN), or may be an in-vehicle Ethernet (Ethernet), or another internal bus implements connections of components/devices shown in FIG. 16. However, for clear description, various types of buses in FIG. 16 are marked as the bus 1603. For ease of representation, only one bold line is used for representation in FIG. 16, but this does not mean that there is only one bus or only one type of bus.

It should be understood that the electronic device 1600 according to this embodiment of this application may correspond to the data transmission apparatus 1400 in embodiments of this application or the data transmission apparatus 1500 in embodiments of this application, and may correspondingly perform operation steps performed by the controller in the method shown in FIG. 4 or FIG. 13 as a main body. In addition, the foregoing and other operations and/or functions of the modules in the electronic device 1600 are respectively intended to implement corresponding procedures of the methods in FIG. 4 or FIG. 13. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a web site, computer, server, or data center to another web site, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the technical solutions of this application.

The foregoing descriptions are merely specific implementations of this application. Any variation or replacement readily figured out by a person skilled in the art according to specific implementations provided in this application shall fall within the protection scope of this application.

## Claims

1. A data transmission method, wherein the method is applied to a sending device, the sending device is separately connected to a plurality of data collection interfaces and a plurality of data transmission channels, each data collection interface is configured to connect to a corresponding audio collection device, and the method comprises:
obtaining, by the sending device through the plurality of data collection interfaces, audio data collected by corresponding audio collection devices;
superposing, by the sending device, audio data whose audio data length is less than a first threshold in the obtained audio data to obtain at least one data combination, wherein each of the at least one data combination comprises audio data collected by at least two audio collection devices, a length of each data combination is less than or equal to the first threshold, and a quantity of the at least one data combination is less than or equal to a quantity of the plurality of data transmission channels; and
sending, by the sending device, each data combination through one of the plurality of data transmission channels.

2. The method according to claim 1, wherein the method further comprises:
sending, by the sending device, audio data whose audio data length is equal to the first threshold in the obtained audio data through a data transmission channel in the plurality of data transmission channels except a data transmission channel that is used to transmit the at least one data combination.

3. The method according to claim 1 or 2, wherein the quantity of the at least one data combination is larger than 1, and data transmission channels used to send any two data combinations in the at least one data combination are different.

4. The method according to any one of claims 1 to 3, wherein the sending, by the sending device, each data combination through one of the plurality of data transmission channels comprises:
sending, based on a correspondence between a sequence number of a data combination and a sequence number of a data transmission channel, each data combination through a data transmission channel with a corresponding sequence number.

5. The method according to any one of claims 1 to 4, wherein the superposing, by the sending device, audio data whose audio data length is less than a first threshold in the obtained audio data to obtain at least one data combination comprises:
superposing, by the sending device according to a preset superposition rule, the audio data whose audio data length is less than the first threshold in the obtained audio data to obtain the at least one data combination.

6. The method according to claim 5, before the obtaining, by the sending device through the plurality of data collection interfaces, audio data collected by corresponding audio collection devices, further comprising:
receiving, by the sending device, a first control instruction from a receiving device through at least one of the plurality of data transmission channels, wherein the first control instruction comprises a first target parameter used to adjust collection depths of the corresponding audio collection devices;
sending, by the sending device, the first control instruction to the corresponding audio collection devices through the plurality of data collection interfaces; and
setting, by the sending device, the superposition rule based on the first target parameter, and sending the superposition rule to the receiving device through at least one of the plurality of data transmission channels.

7. The method according to claim 5, before the obtaining, by the sending device through the plurality of data collection interfaces, audio data collected by corresponding audio collection devices, further comprising:
receiving, by the sending device, a second control instruction from a receiving device and the superposition rule through at least one of the plurality of data transmission channels, wherein the second control instruction comprises a second target parameter used to adjust collection depths of the corresponding audio collection devices; and
sending, by the sending device, the second control instruction to the corresponding audio collection devices through the plurality of data collection interfaces.

8. The method according to any one of claims 5 to 7, wherein the superposition rule comprises a superposition order of the audio data and a length of the superposed audio data.

9. A data transmission method, wherein the method is applied to a receiving device, the receiving device is connected to a sending device through a plurality of data transmission channels, and the method comprises:
receiving, by the receiving device, at least one data combination transmitted through the plurality of data transmission channels, wherein each of the at least one data combination is transmitted through one of the plurality of data transmission channels, and each data combination comprises audio data collected by at least two audio collection devices; and the audio collection device is connected to the sending device through a corresponding data collection interface;
splitting, by the receiving device, the at least one received data combination, to obtain audio data collected by a plurality of audio collection devices; and
processing, by the receiving device, the split audio data collected by the plurality of audio collection devices.

10. The method according to claim 9, wherein the splitting, by the receiving device, the at least one received data combination comprises:
splitting, by the receiving device, the at least one received data combination according to a preset superposition rule.

11. The method according to claim 10, wherein the splitting, by the receiving device, the at least one received data combination according to a preset superposition rule comprises:
determining a sequence number of each data combination by using a correspondence between a sequence number of a data combination and a sequence number of a data transmission channel; and
splitting the at least one data combination based on the sequence number of each data combination and the superposition rule.

12. The method according to claim 10 or 11, before the receiving, by the receiving device, at least one data combination transmitted through the plurality of data transmission channels, further comprising:
sending a first control instruction to the sending device through at least one of the plurality of data transmission channels, wherein the first control instruction comprises a first target parameter used to adjust a collection depth of an audio collection device connected to the sending device; and
receiving, through at least one of the plurality of data transmission channels, a superposition rule that is set based on the first target parameter and that is sent by the sending device.

13. The method according to claim 10 or 11, before the receiving, by the receiving device, at least one data combination transmitted through the plurality of data transmission channels, further comprising:
sending a second control instruction and the superposition rule to the sending device through at least one of the plurality of data transmission channels, wherein the second control instruction comprises a second target parameter used to adjust collection depths of the plurality of data collection devices.

14. The method according to any one of claims 10 to 13, wherein the superposition rule comprises a superposition order of the audio data and a length of the superposed audio data.

15. A data transmission apparatus, wherein the data transmission apparatus is connected to a plurality of data collection interfaces and a plurality of data transmission channels, each data collection interface is connected to a corresponding audio collection device, and the data transmission apparatus comprises:
an obtaining unit, configured to obtain, through a plurality of data collection interfaces, audio data collected by corresponding audio collection devices;
a processing unit, configured to superpose audio data whose audio data length is less than a first threshold in the audio data obtained by the obtaining unit, to obtain at least one data combination, wherein each of the at least one data combination comprises audio data collected by at least two audio collection devices, a length of each data combination is less than or equal to the first threshold, and a quantity of the at least one data combination is less than or equal to a quantity of the plurality of data transmission channels; and
a transmission unit, configured to send each data combination through one of the plurality of data transmission channels.

16. The apparatus according to claim 15, wherein the transmission unit is further configured to send audio data whose audio data length is equal to the first threshold in the audio data obtained by the obtaining unit, through a data transmission channel in the plurality of data transmission channels except a data transmission channel that is used to transmit the at least one data combination.

17. The apparatus according to claim 15 or 16, wherein the quantity of the at least one data combination is larger than 1, and data transmission channels used to send any two data combinations in the at least one data combination are different.

18. The apparatus according to any one of claims 15 to 17, wherein the transmission unit is further configured to:
send, based on a correspondence between a sequence number of a data combination and a sequence number of a data transmission channel, each data combination through a data transmission channel with a corresponding sequence number.

19. The apparatus according to any one of claims 15 to 18, wherein the processing unit is specifically configured to:
superpose, according to a preset superposition rule, audio data whose audio data length is less than the first threshold in the audio data obtained by the obtaining unit, to obtain at least one data combination.

20. The apparatus according to claim 19, wherein before the obtaining unit obtains, through the plurality of data collection interfaces, the audio data collected by the corresponding audio collection devices, the processing unit is further configured to:
receive, by using the transmission unit, a first control instruction from a receiving device, wherein the first control instruction comprises a first target parameter used to adjust collection depths of the corresponding audio collection devices;
control the obtaining unit to send the first control instruction to the corresponding audio collection devices; and
set the superposition rule based on the first target parameter, and send the superposition rule to the receiving device by using the transmission unit.

21. The apparatus according to claim 19, wherein before the obtaining unit obtains, through the plurality of data collection interfaces, the audio data collected by the corresponding audio collection devices, the processing unit is further configured to:
receive, by using the transmission unit, a second control instruction from a receiving device and the superposition rule, wherein the second control instruction comprises a second target parameter used to control collection depths of the corresponding audio collection devices; and
control the obtaining unit to send the second control instruction to the corresponding audio collection devices.

22. The apparatus according to any one of claims 19 to 21, wherein the superposition rule comprises a superposition order of the audio data and a length of the superposed audio data.

23. A data transmission apparatus, wherein the data transmission apparatus is connected to a sending device through the plurality of data transmission channels, and comprises:
a transceiver unit, configured to receive at least one data combination transmitted through the plurality of data transmission channels, wherein each of the at least one data combination is transmitted through one of the plurality of data transmission channels, and each data combination comprises audio data collected by at least two audio collection devices; and the audio collection device is connected to the sending device through a corresponding data collection interface;
a splitting unit, configured to split the at least one data combination received by the transceiver unit, to obtain audio data collected by a plurality of audio collection devices; and
a processing unit, configured to process the split audio data collected by the plurality of audio collection devices.

24. The apparatus according to claim 23, wherein the splitting unit is specifically configured to:
split, according to a preset superposition rule, the at least one data combination received by the transceiver unit.

25. The apparatus according to claim 24, wherein the splitting unit is specifically configured to: determine a sequence number of each data combination by using a correspondence between a sequence number of a data combination and a sequence number of a data transmission channel; and
split the at least one data combination based on the sequence number of each data combination and the superposition rule.

26. The apparatus according to claim 24 or 25, wherein before the transceiver unit receives the at least one data combination transmitted through the plurality of data transmission channels, the processing unit is further configured to:
send a first control instruction to the sending device by using the transceiver unit, wherein the first control instruction comprises a first target parameter used to adjust a collection depth of an audio collection device connected to the sending device; and
the transceiver unit is further configured to receive a superposition rule that is set according to the first control instruction and that is sent by the sending device.

27. The apparatus according to claim 24 or 25, wherein before the transceiver unit receives the at least one data combination transmitted through the plurality of data transmission channels, the processing unit is further configured to:
send a second control instruction and the superposition rule to the sending device by using the transceiver unit, wherein the second control instruction comprises a second target parameter used to adjust a collection depth of an audio collection device connected to the sending device.

28. The apparatus according to any one of claims 23 to 27, wherein the superposition rule comprises a superposition order of the audio data and a length of the superposed audio data.

29. An electronic device, comprising a processor and a memory, wherein the memory stores instructions, and when the processor executes the instructions, the apparatus is enabled to perform the method according to any one of claims 1 to 8 or the method according to any one of claims 9 to 14.

30. A computer-readable storage medium, wherein the computer-readable storage medium stores a computer program, the computer program comprises program instructions, and when the program instructions are executed by a computer, the computer is enabled to perform the method according to any one of claims 1 to 8 or the method according to any one of claims 9 to 14.
